# EUROPÄISCHE PATENTSCHRIFT

(11) **EP 3 953 161 B1**
(45) Veröffentlichungstag und Bekanntmachung des Hinweises auf die Patenterteilung: **25.02.2026**
(21) Anmeldenummer: 20714147.4
(22) Anmeldetag: 17.03.2020
(51) Int. Cl.: B29C 73/16

(54) **PANNENHILFESYSTEM ZUM ABDICHTEN UND AUFPUMPEN VON KRAFTFAHRZEUGLUFTREIFEN**
PUNCTURE REPAIR SYSTEM FOR SEALING AND INFLATING MOTOR VEHICLE TYRES
SYSTÈME AUXILIAIRE DE DÉPANNAGE PERMETTANT D'ÉTANCHÉIFIER ET DE GONFLER DES PNEUMATIQUES DE VÉHICULE AUTOMOBILE

(30) Priorität: 09.04.2019 DE 102019205091
(43) Veröffentlichungstag der Anmeldung: 16.02.2022
(73) Patentinhaber: Continental Reifen Deutschland GmbH, 30175 Hannover (DE)
(72) Erfinder: DETERING, Rainer - c/o Continental AG, 30419 Hannover (DE); FISCHER, Tim - c/o Continental AG, 30419 Hannover (DE); SCHLOSSER, Florian - c/o Continental AG, 30419 Hannover (DE); ZAUM, Christopher - c/o Continental AG, 30419 Hannover (DE)
(74) Vertreter: Continental Corporation
(86) Internationale Anmeldenummer: PCT/EP2020/057168
(87) Internationale Veröffentlichungsnummer: WO 2020/207715

(56) Entgegenhaltungen:
- EP-A1- 2 620 271
- WO-A1-2010/006771
- WO-A1-2015/112267
- US-A1- 2016 144 672

## Beschreibung

Die Erfindung betrifft ein Pannenhilfesystem zum Abdichten und Aufpumpen von Kraftfahrzeugluftreifen, wobei das Pannenhilfesystem folgende Einrichtungen umfasst: a. eine Druckgasquelle, bevorzugt ein Kompressor, b. einen Behälter zur Aufnahme eines in einen Kraftfahrzeugluftreifen einfüllbares Dichtmittel, wobei der Behälter einen Verbindungsanschluss aufweist, c. eine Ventileinheit zur Erzeugung einer Mischung aus Dichtmittel und Druckgas, wobei die Ventileinheit einen mit dem Verbindungsanschluss des Behälters hermetisch verschließbaren Aufnahmeanschluss aufweist und die Ventileinheit mit einer an die Druckgasquelle anschließbaren Einlassleitung und einer an den Kraftfahrzeugluftreifen anschließbaren Auslassleitung versehen ist, d. eine Anzeige- oder Anleitungseinheit.

Es gibt Pannenhilfesystem, bei denen das Abdichtmittel mit Hilfe des Kompressors durch den Reifenventileinsatz gepumpt und danach ohne Unterbrechung der Reifen mit Luft gefüllt wird. Üblicherweise stehen dabei Teile des Systems, insbesondere der Kompressor, auf dem Boden neben dem Reifen und sind mit einem ausreichend langen, druckfesten Schlauch mit dem Reifenventil verbunden. Es ist bei beiden Systemen darauf zu achten, dass während der Benutzung alle relevanten Systeminformationen (z. B. Druckanzeige) benutzerfreundlich zur Verfügung gestellt werden.

Wenn solche Pannenhilfesysteme gebraucht werden, befindet sich der Nutzer in ungewohnter und ungeübter Situation. Die einzelnen Zubehörteile solcher Reparatursätze müssen daher "zur Hand" sein und in einer Weise miteinander verbunden oder zusammengestellt sein, die sicherstellt, dass alle Funktionsteile sich am richtigen und z.B. um Betrieb vorgesehen Platz befinden und miteinander wirken können. Das ist nicht ganz problemlos zu gewährleisten, insbesondere dann, wenn je nach Betriebszustand zunächst Dichtmittelbehälter und diverse Schlauchverbindungen angeschlossen oder umgebaut werden müssen. Oft werden auch Systemteile verlegt, vergessen oder falsch angeschlossen. Aus diesem Grund ist häufig auf dem Pannenhilfesystem eine Bedienungsanleitung aufgeklebt oder aufgedruckt.

Nun ist der augenblickliche Trend zu größeren Reifenabmessungen diametral zum Trend bei Pannensets, die immer kleiner und kostengünstiger werden müssen. Einer der Zielkonflikte bei der Konstruktion kleiner Pannensets ist u.a. die Dichtmittelmenge sowie die Packmaße zum Verstauen des Pannensets im Fahrzeug. Bei besonders kleinem Kompressor und großem Dichtmittelbehälter wird häufig, wenn der Kompressor auf der Erde neben dem Reifen betrieben werden soll, einen zusätzlichen Ständer zum Stabilisieren des Pannenhilfesystems beim Pumpen benötigt, was eben gerade die Packmaße erhöht und ungewünscht ist.

Zur Erleichterung der Handhabung der Geräte/Reparatursätze offenbart die EP 1914062 A1 einen Reparatursatz zum Abdichten und Aufpumpen aufblasbarer Gegenstände, der mindestens ein Befestigungsmittel aufweist, mit dessen Hilfe die Einrichtung im Betriebszustand an einem Fahrzeug temporär befestigbar ist. Damit erhält man eine Verbindung zwischen den wichtigsten Bauteilen/Zubehörteilen, so dass alle Zubehörteile des Pannenhilfesets sich beim Einsatz zusammen und am richtigen Platz befinden.

EP 1121324 B2 offenbart hierzu eine "Entnahmeeinheit mit einem ein Abdichtmittel enthaltenden Behälter für eine Vorrichtung zum Abdichten aufblasbarer Gegenstände, [...] [wobei] die Entnahmeeinheit auf ihrer im verbundenen Zustand vom Behälter abgewandten Seite mit einer Standfläche versehen ist" (s. Anspruch 1).

Die US 2016/144672 A1 offenbart einen Luftkompressor gemäß dem Oberbegriff des Anspruchs 1 mit einem Gehäuse mit einer vorderen Kappe, die mit einem Schalter versehen ist, und einer hinteren Kappe, in der ein Zigarettenanzünder, ein Kabel des Zigarettenanzünders und ein Luftschlauch untergebracht werden können, eine Aufblasvorrichtung mit einem Druckmesser, einem Druckentlastungsknopf und einer Entlüftungsverbindung, eine Verbindungseinheit mit einem Zylindereinsatz, der mit der Entlüftungsverbindung der Aufblasvorrichtung verbunden ist, einem Anschlusseinsatz und einem Entriegelungsknopf, ein Umschaltventil mit einem Anschluss, der in den Anschlusseinsatz der Verbindungseinheit eingesetzt ist, und einem Umschaltknopf, und eine Reifenreparaturlösung, die mit dem Umschaltventil verbunden ist. Die Umschaltung zwischen Luftfüllung und Reifenreparaturlösung kann einfach durch Schwenken des Umschaltknopfes erfolgen.

Die EP 2 620 271 A1 beschreibt ein Pannenset, das die Differenz zwischen einem auf einem Manometer einer Kompressorvorrichtung angezeigten Druck und einem tatsächlichen Reifeninnendruck reduziert. Die Kompressorvorrichtung ist direkt mit einer Flascheneinheit verbunden. Eine Kappe enthält ein Einwegventil, um zu verhindern, dass Pannendichtmittel zur Kompressorvorrichtung zurückfließt. Ein Zylinder der Kompressorvorrichtung umfasst einen Abzweigcharger, der Druckluft von einem Pumpcharger erhält. Der Abzweigcharger ist mit einem Luftzuführungskanal, der sich zu einer Flascheneinheit erstreckt, einem Manometer, einem Überdruckventil und einem Oberflächencharger verbunden, um die Druckluft aus dem Pumpcharger zu speichern und die Druckschwankungen der Druckluft zu reduzieren.

Die WO 2010/006771 A1 offenbart eine Vorrichtung zum Einbringen von Luft und/ oder Abdichtmittel in einen Reifen, insbesondere Kraftfahrzeugreifen, umfasst einen Behälter für das Abdichtmittel, insbesondere eine Flasche, ein mit dem Behälter verbundenes oder verbindbares Druckerzeugungsmittel, insbesondere eine elektrische Pumpe oder ein Kompressor, zum Entleeren des Behälters, gegebenenfalls ein elektrisches Anschlusskabel für das Druckerzeugungsmittel, welches an seinem Ende ein Verbindungselement, insbesondere Stecker, aufweist zur Verbindung des Anschlusskabels mit einer Stromversorgung, insbesondere dem Zigarrenanzünder eines Kraftfahrzeuges, einen mit dem Behälter verbundenen oder verbindbaren Schlauch für die Luft und/ oder das Abdichtmittel, dessen anderes Ende mit dem zu befüllenden Reifen verbindbar ist und ein Gehäuse zur Aufnahme mindestens eines Teils der Vorrichtungsbestandteile. Der Behälter ist in Gebrauchslage der Vorrichtung liegend im Gehäuse angeordnet.

Die WO 2015/112267 A1 offenbart eine Vorrichtung zur Abgabe von Reifendichtmittel aus einem Behälter mittels einer Druckquelle, wobei sich die Druckquelle und der Behälter in einem Gehäuse befinden, ist der Behälter im Gehäuse austauschbar mit der Druckquelle zu verbinden.

Eine primäre Aufgabe, die der Erfindung zugrunde liegt, besteht darin, ein Pannenhilfesystem bereitzustellen, welches einen möglichst großvolumigen Dichtmittelbehälter umfasst, sodass die Verstaubbarkeit des Pannenhilfesets und/oder die Bedienerfreundlichkeit Verstaubbarkeit des Pannenhilfesets überhaupt nicht oder nicht übermäßig verschlechtert wird. Eine sekundäre Aufgabe war es, dass der Behälter groß genug ist, dass die Dichtmittelmenge auch für große Reifen ausreicht, beispielsweise für SUV-Reifen.

Gelöst wird diese Aufgabe erfindungsgemäß durch ein Pannenhilfesystem gemäß dem Anspruch 1.

Überraschenderweise wurde herausgefunden, dass der Zielkonflikt zwischen einem möglichst kleinen Packmaß und möglichst großer Behälter für das Dichtmittel dadurch gelöst werden kann, dass der Dichtmittelbehälter eine geringere Symmetrie als üblich besitzt und gleichzeitig so an der Ventileinheit verschraubt wird, dass er in einer vorbestimmten Position zum Stehen gelangt. Diese vorbestimmte Position ist dabei je nach Symmetrie des Behälters eines erfindungsgemäßen Pannenhilfesystems so zu wählen, dass eventuell vorhandene Anzeigeeinheiten und/oder Anleitungseinheiten nicht gedeckt werden. Aufgrund der großen Anzahl von Symmetrien, die für eine Dichtmittelbehälter eines erfindungsgemäßen Pannenhilfesystems infrage kämen, kommt somit auch je nach Symmetrie des Behälters eine große Anzahl von vorbestimmten Positionen infrage.

Im Rahmen der vorliegenden Erfindung ist das erfindungsgemäße Pannenhilfesystem besonders bevorzugt ein Pannenhilfesystem zum Abdichten und Aufpumpen von Nutzfahrzeugreifen und/oder PkW-Reifen, insbesondere bevorzugt zum Abdichten und Aufpumpen von SUV-Reifen.

Im Rahmen der vorliegenden Erfindung wird bei der Bestimmung der Symmetrie des Behälters die Form des Verbindungsanschlusses nicht mitberücksichtigt, wohl aber seine Position. Somit weist die Symmetrie herkömmlicher Behälter von im Stand der Technik bekannten Pannenhilfesystems eine Drehgruppe C_{∞} auf, da der Verbindungsanschluss mittig am oberen Ende der Längserstreckung positioniert ist und somit die Position des Verbindungsanschlusses auf die Hauptdrehachse der Drehgruppe C_{∞} fällt.

Demgegenüber fallen jedoch solche Behälter, bei denen die Position des Verbindungsanschlusses auf eine andere Stelle fällt, nicht in die Gruppe der Behälter mit einer Drehgruppe C_{∞}, weil die Position des Verbindungsanschlusses nicht auf die Hauptdrehachse der Drehgruppe C_{∞} fällt und sie somit Behälter erfindungsgemäßer Pannenhilfesysteme sind.

Im Rahmen der vorliegenden Erfindung werden die Ausdrücke "erfindungsgemäßes Pannenhilfesystem" und "erfindungsgemäße Vorrichtung" synonym verwendet.

Im Rahmen der vorliegenden Erfindung ist unter dem Ausdruck "eine vorbestimmte Position" zu verstehen, dass die Verbindung zwischen Behälter und Ventileinheit einer erfindungsgemäßen Vorrichtung so gewählt ist, dass Behälter jedes produzierten Pannenhilfesystems im Betriebszustand immer die gleiche Orientierung relativ zur Ventileinheit aufweist. Es reicht daher nicht aus, dass der Behälter lediglich eine durch den Anschluss zwischen Ventileinheit und Behälter festgelegte zufällige Orientierung aufweist, wobei die Orientierung jedoch zwischen einzelnen produzierten Pannenhilfesysteme variieren kann. Eine durch den Anschluss zwischen Ventileinheit und Behälter festgelegte und gezielt gewollte Orientierung des Behälters kann beispielsweise aufgrund der Gewindeanfänge des Aussengewindes des Behälters oder des Innengewindes der Ventileinheit, wie nachstehend beschrieben, bestimmt werden. Nur eine solche gezielt gewollte Orientierung des Behälters relativ zur Ventileinheit stellt eine vorbestimmte Position im Rahmen der vorliegenden Erfindung dar.

Der vorstehend beschriebene Verbindungsanschluss einer erfindungsgemäßen Vorrichtung könnte beispielsweise ein Bajonettverschluss, ein Drehverschluss, ein Schraubverschluss, ein Steckverschluss oder eine Kombination der vorstehenden sein.

Im Rahmen der vorigen Erfindung ist eine Anleitungseinheit beispielsweise ein Aufkleber mit einer Bedienungsanleitung des Pannenhilfesystems, wie er häufig auf der Ventileinheit eines Pannenhilfesystems angebracht ist, um dem Benutzer zu informieren, wie der Ablauf der einzelnen Prozessschritte oder Betriebsstufen beim Abdichten und Aufpumpen von Kraftfahrzeugluftreifen aussieht und was er in den jeweiligen Betriebsstufen zu tun hat. Die einzelnen Betriebsstufen sind zum Beispiel Dichtmittel und Luft pumpen, Druckkontrolle, Fahren und Abdichten, Nachpumpen und finale Druckkontrolle. Eine Anleitungseinheit kann dabei auch elektronische Anzeigen, insbesondere solche mit Touchscreen umfassen.

Im Rahmen der vorliegenden Erfindung ist eine Anzeigeeinheit beispielsweise die Anzeige eines Manometers, welche auf der Ventileinheit angezeigt werden muss, um dem Benutzer eine Hilfe in die Hand zu geben, sodass er weiß, wann er von einer Betriebsstufe des Pannenhilfesystems zur nächsten schalten kann. Eine Anzeigeeinheit kann dabei auch elektronische Anzeigen, insbesondere solche mit Touchscreen umfassen.

Bevorzugt ist eine erfindungsgemäße Vorrichtung wie vorstehend beschrieben oder wie vorstehend als bevorzugt beschrieben, wobei die eine vorbestimmte Position des Behälters so gewählt ist, dass die Anzeige- oder Anleitungseinheit zumindest teilweise sichtbar ist, bevorzugt größtenteils sichtbar, besonders bevorzugt gänzlich sichtbar.

Ein Vorteil des vorstehend beschriebenen Aspekts der vorliegenden Erfindung ist, dass der Benutzer trotz voluminöser Behälter immer noch die Anzeige- und Anleitungseinheiten eines erfindungsgemäßen Pannenhilfesystems gut lesen kann. Dies kann wie nachstehend beschrieben durch eine asymmetrische Position des Verbindungsanschlusses am Behälter erfindungsgemäßer Pannenhilfesysteme oder durch Behälter erfindungsgemäßer Pannenhilfesysteme mit einer geringeren Symmetrie erreicht werden.

Bevorzugt ist eine erfindungsgemäße Vorrichtung wie vorstehend beschrieben oder wie vorstehend als bevorzugt beschrieben, wobei
- die Ventileinheit und der Kompressor in einem Bauteil umgeben von einer Hülle integriert sind, wobei die Anzeige- und/oder Anleitungseinheiten auf einer Seitenfläche der Hülle angeordnet sind,
   und/oder
- der Aufnahmeanschluss der Ventileinheit nahe einer Kante der einen Seitenfläche mit den Anzeige- und/oder Anleitungseinheiten angeordnet ist, wobei das Wort "nahe" bevorzugt bedeutet, dass der Abstand zwischen dem Aufnahmeanschluss und der Kante nicht mehr als 20 cm aufweist, besonders bevorzugt nicht mehr als 10 cm, ganz besonders bevorzugt nicht mehr als 5 cm.

Ein Vorteil des vorstehend beschriebenen Aspekts der vorliegenden Erfindung ist, dass insbesondere die vorstehend als bevorzugt beschriebenen Vorrichtungen statisch sehr instabil sind und somit Gefahr laufen im Betrieb umzufallen. Es ist daher besonders vorteilhaft, dass der Behälter nicht irgendeine, sondern eine vorstehend oder nachstehend beschriebene vorbestimmte Position einnimmt.

Bevorzugt ist eine erfindungsgemäße Vorrichtung wie vorstehend beschrieben oder wie vorstehend als bevorzugt beschrieben, wobei die Position des Verbindungsanschlusses auf einer Drehachse der Symmetrie des Behälters liegt, wobei die Position des Verbindungsanschlusses bevorzugt auf der Hauptdrehachse entlang der Mittelachse des Behälters aufweist. Letztere werden im Rahmen der vorliegenden Erfindung Behälter mit symmetrischer Position des Verbindungsanschlusses genannt.

Ein Vorteil des vorstehend beschriebenen Aspekts der vorliegenden Erfindung ist, dass das Gewicht des Behälters so einer erfindungsgemäßen Vorrichtung möglichst gleichmäßig über dem Verbindungsanschluss verteilt wird und somit das Pannenhilfesystem im Betriebszustand eine größere Stabilität aufweist als bei Behältern mit einem Verbindungsanschluss an einer anderen Position, bei denen der Massenmittelpunkt des Behälters nicht auf der Hauptdreh- oder Mittelachse des Behälters liegt. Letztere werden im Rahmen der vorliegenden Erfindung Behälter mit asymmetrischer Position des Verbindungsanschlusses genannt.

Im Rahmen der vorliegenden Erfindung ist die Mittelachse eines Behälters eines erfindungsgemäßen Pannenhilfesystems stets die Achse entlang der Längserstreckung des Behälters, d.h. der maximalen Erstreckung des Behälters.

Bevorzugt ist eine erfindungsgemäße Vorrichtung wie vorstehend beschrieben oder wie vorstehend als bevorzugt beschrieben, wobei die eine vorbestimmte Position so gewählt ist, dass die Senkrechte einer Wandfläche des in der vorbestimmten Position befindlichen Behälters in Richtung geometrischen Mittelpunkt der Anzeige- und/oder Anleitungseinheit zeigt, wobei die Senkrechte an dem Punkt auf der Wandfläche und/oder an der Wandfläche gebildet wird, der oder die den kleinsten Abstand zur Mittelachse des Behälters aufweist. Im Rahmen der vorliegenden Erfindung verläuft die Mittelachse des Behälters einer erfindungsgemäßen Vorrichtung bevorzugt parallel zur Längserstreckung des Behälters, wobei die Längserstreckung des Behälters bevorzugt die Erstreckung des Behälters entlang seiner maximalen Erstreckung ist.

Ein Vorteil des vorstehend beschriebenen Aspekts der vorliegenden Erfindung ist, dass selbst bei sehr voluminösen Behältern einer erfindungsgemäßen Vorrichtung immer noch eine ausreichende Lesbarkeit der Anzeige- und Anleitungseinheiten eine erfindungsgemäße Vorrichtung für den Benutzer sichtbar sind.

Im Rahmen der vorliegenden Erfindung bedeutet der Ausdruck "die Senkrechte einer Wandfläche des Behälters zeigt auf den geometrischen Mittelpunkt", dass die Senkrechte mit der direkten Verbindungsstrecke zwischen dem geometrischen Mittelpunkt Anzeige- und Anleitungseinheiten und der Mittelachse des Behälters maximal einen Abweichungswinkel ß von +/- 35° aufspannt, bevorzugt von maximal 20°.

Im Rahmen der vorliegenden Erfindung wird bei der Ermittlung des geometrischen Mittelpunkts der Anzeigeeinheit nur die sichtbare Fläche der Anzeigeeinheit berücksichtigt. Gleiches gilt für die Bestimmung einer Anleitungseinheit. Für den Fall, dass auf einem erfindungsgemäßen Pannenhilfesystem mehrere Anzeige- und/oder Anleitungseinheit vorliegen, werden zu Bestimmung des einen geometrischen Mittelpunkts zuerst die einzelnen geometrischen Mittelpunkte der einzelnen Einheiten bestimmtund anschließend der eine geometrische Mittelpunkt auf Basis der bereits bestimmten geometrischen Mittelpunkte der einzelnen Einheiten bestimmt.

Für den Fall, dass auf einem erfindungsgemäßen Pannenhilfesystem mehrere Anzeige- und Anleitungseinheit vorliegen oder diese zu groß sind, um im Betriebszustand vollständig sichtbar zu bleiben, ist es ganz besonders bevorzugt, dass die geometrischen Mittelpunkte der einzelnen Anzeige- und Anleitungseinheiten vor dem Bestimmen des einen geometrischen Mittelpunkts gewichtet werden, da so vorteilhafterweise die wichtigen Informationen sichtbar bleiben. In der folgenden Tabelle sind die Gewichtungen der einzelnen Anzeige- und Anleitungseinheiten gezeigt:

| Anzeige- oder Anleitungseinheit | Gewichtung |
|---|---|
| Anzeigeeinheit | 2 |
| Anleitungseinheit | 1 |

Bevorzugt ist eine erfindungsgemäße Vorrichtung wie vorstehend beschrieben oder wie vorstehend als bevorzugt beschrieben, umfassend geeignete Verbindungsmittel zur Verbindung zwischen Druckgasquelle und Einlassleitung der Ventileinheit sowie zwischen Auslassleitung der Ventileinheit und dem Kraftfahrzeugluftreifen.

Bevorzugt ist eine erfindungsgemäße Vorrichtung wie vorstehend beschrieben oder wie vorstehend als bevorzugt beschrieben, wobei die maximale Quererstreckung des Behälters mindestens der Hälfte des Abstandes zwischen dem Mittelpunkt des Aufnahmeanschlusses der Ventileinheit und dem geometrischen Mittelpunkt der Anzeige- und/oder Anleitungseinheit entspricht, bevorzugt mindestens 75 % des Abstandes, besonders bevorzugt mindestens 100 % des Abstandes, ganz besonders bevorzugt mindestens 150 % oder mindestens 200 % des Abstandes.

Insbesondere bei dem vorstehend beschriebenen Aspekt ist die vorliegende Erfindung vorteilhaft, da bei den vorstehend als bevorzugt beschriebenen erfindungsmäßen Vorrichtungen die Anzeigeeinheit und/oder die Anleitungseinheit auf der Ventileinheit durch den Behälter bedeckt werden und somit für den Benutzer nicht sichtbar oder nur schwer sichtbar sind. Auch weisen die vorstehend als bevorzugt beschriebenen erfindungsgemäßen Vorrichtungen besonders günstige Stabilitäten im Betriebszustand auf, wenn vorteilhaftweise ein Behälter mit einem Verbindungsanschluss in einer symmetrischen Position wie vorstehend beschrieben eingesetzt wird.

Im Rahmen der vorliegenden Erfindung ist die maximale Quererstreckung des Behälters einer erfindungsgemäßen Vorrichtung die maximale Erstreckung des Behälters, wobei die Erstreckungsrichtung dieser maximalen Erstreckung senkrecht zur Mittelachse oder zu Längsachse des Behälters steht.

Eine erfindungsgemäße Vorrichtung ist wie vorstehend beschrieben oder wie vorstehend als bevorzugt beschrieben, wobei der Aufnahmeanschluss der Ventileinheit ein Innengewinde zur Aufnahme des Verbindungsanschlusses des Behälters aufweist und der Verbindungsanschluss des Behälters ein Schraubverschluss mit einem in das besagte Innengewinde anschraubbaren Außengewinde aufweist.

Ein Vorteil des vorstehend beschriebenen Aspekts der vorliegenden Erfindung ist, dass sich Gewindeanschlüsse besonders gut für den Betrieb eines erfindungsgemäßen Pannenhilfesystems und insbesondere besonders gut zum hermetischen Verschließen eignen. Die vorstehend als bevorzugt beschriebene erfindungsgemäße Vorrichtung ist insbesondere vorteilhaft in Verbindung mit den vorstehend beschriebenen Behältern einer erfindungsgemäßen Vorrichtung, insbesondere mit solchen, welche eine Wandfläche zur Bestimmung einer Senkrechten eines in der vorbestimmten Position befindlichen Behälters aufweisen.

Bevorzugt ist eine erfindungsgemäße Vorrichtung wie vorstehend beschrieben oder wie vorstehend als bevorzugt beschrieben, wobei die maximale Quererstreckung des Behälters mindestens der Hälfte des Abstandes zwischen der Mittelachse des Innengewindes der Ventileinheit und dem geometrischen Mittelpunkt der Anzeige- und/oder Anleitungseinheit entspricht, bevorzugt mindestens 75 % des Abstandes, besonders bevorzugt mindestens 100 % des Abstandes, ganz besonders bevorzugt mindestens 150 % oder mindestens 200 % des Abstandes.

Insbesondere bei dem vorstehend beschriebenen Aspekt ist die vorliegende Erfindung vorteilhaft, da bei den vorstehend als bevorzugt beschriebenen erfindungsmäßen Vorrichtungen die Anzeigeeinheit und/oder die Anleitungseinheit auf der Ventileinheit durch den Behälter bedeckt werden und somit für den Benutzer nicht sichtbar oder nur schwer sichtbar sind. Auch weisen die vorstehend als bevorzugt beschriebenen erfindungsgemäßen Vorrichtungen besonders günstige Stabilitäten im Betriebszustand auf, wenn vorteilhaftweise ein Behälter mit einem Verbindungsanschluss in einer symmetrischen Position wie vorstehend beschrieben eingesetzt wird.

Bevorzugt ist eine erfindungsgemäße Vorrichtung wie vorstehend beschrieben oder wie vorstehend als bevorzugt beschrieben, wobei das Innengewinde und das Außengewinde jeweils mindestens einen Gewindeanfang aufweisen, wobei die Gewindeanfänge so positioniert sind, dass der Behälter mit dem Verbindungsanschluss im Zusammenwirken mit dem Aufnahmeanschluss in dem betriebsbereiten und/oder hermetisch verschlossenen Zustand eine vorbestimmte Position einnimmt, sodass die Anzeige- oder Anleitungseinheit zumindest teilweise sichtbar ist, bevorzugt größtenteils sichtbar, besonders bevorzugt gänzlich sichtbar.

Ein Vorteil des vorstehend beschriebenen Aspekts der vorliegenden Erfindung ist, dass der Benutzer trotz voluminöser Behälter immer noch die Anzeige- und Anleitungseinheiten eines erfindungsgemäßen Pannenhilfesystems gut lesen kann. Dies kann wie vor- oder nachstehend beschrieben durch eine asymmetrische Position des Verbindungsanschlusses am Behälter erfindungsgemäßer Pannenhilfesysteme oder durch Behälter erfindungsgemäßer Pannenhilfesysteme mit einer geringeren Symmetrie erreicht werden.

Bevorzugt ist eine erfindungsgemäße Vorrichtung wie vorstehend beschrieben oder wie vorstehend als bevorzugt beschrieben, wobei der Behälter eine kleinere Quererstreckung und eine zur kleineren Quererstreckung senkrecht verlaufenden größeren Quererstreckung aufweist, wobei das Verhältnis zwischen kleinerer Quererstreckung zur größeren Quererstreckung bevorzugt im Bereich von 0,1:1 bis 1: 1, besonders bevorzugt im Bereich von 0,4:1 bis 1:1, ganz besonders bevorzugt im Bereich von 0,55:1 bis 1:1. Bevorzugt weist die Symmetrie solche Behälter eine C₂-Drehachse entlang der Mittelachse des Behälters auf.

Ein Vorteil des vorstehend beschriebenen Aspekts der vorliegenden Erfindung ist, dass Behälter, welche eine kleineren und eine größere Quererstreckung aufweisen, verstauungsfreundlicher mit einer Ventileinheit eines erfindungsgemäßen Pannenhilfesystems verpackt werden können als runde oder würfelförmige Behälter und somit beispielsweise auch unter den Fahrersitz eines Fahrzeuges verstaut werden können.

Dieser Vorteil entsteht insbesondere dadurch, dass die kleinere und die größere Quererstreckung des Behälters der Höhe und der Breite der Ventileinheit einer erfindungsgemäßen Vorrichtung angepasst werden können und somit keine unnötige Vergrößerung der Verpackung eines erfindungsgemäßen Pannenhilfesystems bewirken.

Bevorzugt ist eine erfindungsgemäße Vorrichtung wie vorstehend beschrieben oder wie vorstehend als bevorzugt beschrieben, wobei die Ventileinheit und die Druckgasquelle integral in einer Einheit miteinander verbaut sind.

Bevorzugt ist eine erfindungsgemäße Vorrichtung wie vorstehend beschrieben oder wie vorstehend als bevorzugt beschrieben, wobei der Behälter quaderförmig ist und eine zu einer Mittelachse parallel verlaufende Längserstreckung aufweist, wobei ein zur Längserstreckung senkrecht verlaufender Querschnitt des Behälters rechteckförmig ist, wobei die vorbestimmte Position des im Innengewinde angeschraubten Behälters bevorzugt so ist, dass die Wandfläche mit dem kleinsten oder dem zweitkleinsten Abstand zum Schraubverschluss des quaderförmigen Behälters in Richtung des geometrischen Mittelpunkts der Anzeige- oder Bedieneinheit des Pannenhilfesystems zeigt. Bevorzugt weist die Symmetrie solche Behälter eine C₂-Drehachse entlang der Mittelachse des Behälters auf.

Ein Vorteil des vorstehend beschriebenen Aspekts der vorliegenden Erfindung ist, dass selbst bei sehr voluminösen Behältern einer erfindungsgemäßen Vorrichtung immer noch eine ausreichende Lesbarkeit der Anzeige- und Anleitungseinheiten eine erfindungsgemäße Vorrichtung für den Benutzer sichtbar sind.

Im Rahmen der vorliegenden Erfindung bedeutet der Ausdruck "die Wandfläche mit dem kleinsten oder dem zweitkleinsten Abstand zum Schraubverschluss des quaderförmigen Behälters in Richtung des geometrischen Mittelpunkts der Anzeige- oder Bedieneinheit des Pannenhilfesystems zeigt", dass die Senkrechte dieser Wandfläche und die direkte Verbindungsstrecke zwischen dem geometrischen Mittelpunkt und dem Mittelpunkt der Mittelachse des Behälters maximal einen Abweichungswinkel ß von +/- 35° aufspannt, bevorzugt von maximal 20°.

Eine erfindungsgemäße Vorrichtung ist wie vorstehend beschrieben oder wie vorstehend als bevorzugt beschrieben, wobei das Innengewinde der Ventileinheit eine Aussparung zum Einrasten in eine Erhebung aufweist und das Außengewinde des Schraubverschlusses eine Erhebung zum Einrasten in eine Aussparung aufweist. Insbesondere bevorzugt sind die Bajonettverschlüsse wie in den Ansprüchen oder dem Absatz [0007] der ursprünglich eingereichten Anmeldungsunterlagen der Offenlegungsschrift DE 102005019766 definiert.

Ein Vorteil des vorstehend beschriebenen Aspekts der vorliegenden Erfindung ist, dass bei Bajonettverschlüssen wie vorstehend beschrieben besonders einfach eine vorbestimmte Position des hermetisch verschlossenen Bajonettverschlusses eingestellt werden kann.

Bevorzugt ist eine erfindungsgemäße Vorrichtung wie vorstehend beschrieben oder wie vorstehend als bevorzugt beschrieben, wobei der Behälter
- anstelle, dass seine Symmetrie keine Drehgruppe C_{∞} aufweist, nicht zylinderförmig und nicht kugelförmig ist,
   oder
- eine Symmetrie ohne eine Drehgruppe Cₙ aufweist, wobei n größer 8 ist, bevorzugt größer 6, besonders bevorzugt größer 4, ganz besonders bevorzugt ist n 2 oder 3.

Ein Vorteil des vorstehend beschriebenen Aspekts der vorliegenden Erfindung ist, dass insbesondere Behälter mit niedrigeren Symmetrien wie vorstehend beschrieben möglichst große Volumina aufweisen und gleichzeitig die Anzeigeeinheit und/oder Anleitungseinheit eines erfindungsgemäßen Pannenhilfesystems nicht verdecken.

Bevorzugt ist eine erfindungsgemäße Vorrichtung wie vorstehend beschrieben oder wie vorstehend als bevorzugt beschrieben, wobei eine Quererstreckung des Behälters etwa, bevorzugt genau, der Höhe der Ventileinheit entspricht und bevorzugt eine weitere Erstreckung des Behälters der Länge oder Breite der Ventileinheit oder des gesamten Bauteils, in welcher die Ventileinheit und die Druckgasquelle wie vorstehend oder nachstehend beschrieben integriert sind, entspricht. Hierbei beschreibt der Ausdruck "etwa" eine noch tolerierbare Abweichung von maximal 5 mm oder bevorzugt maximal 1 mm.

Ein Vorteil des vorstehend beschriebenen Aspekts der vorliegenden Erfindung ist, dass ein erfindungsmäßen Pannenhilfesystem besonders flach verpackt werden kann und somit in dieser Dimension nur durch die Höhe der Ventileinheit begrenzt wird. Somit ist es möglich, ein erfindungsgemäßes Pannenhilfesystem vorstehend als bevorzugt beschrieben auch unter einem Fahrersitz zu verstauen.

Bevorzugt ist eine erfindungsgemäße Vorrichtung wie vorstehend beschrieben oder wie vorstehend als bevorzugt beschrieben, die Ventileinheit ein Gehäuse zumindest hauptsächlich bestehend aus Kunststoff aufweist, wobei das Gehäuse gemäß einem Spritzgussverfahren hergestellt werden kann, bevorzugt nach einem Verfahren wie nachstehend beschrieben.

Ein Vorteil des vorstehend beschriebenen Aspekts der vorliegenden Erfindung ist, dass mittels eines Spritzgussverfahren die Gewindeanfänge eines Innengewindes oder eines Außengewindes eines vorstehend als bevorzugt beschriebenen erfindungsgemäßen Pannenhilfesystems wie vorstehend als vorteilhaft beschrieben positioniert werden können.

In besonders hohem Maße bevorzugt ist eine erfindungsgemäße Vorrichtung wie vorstehend beschrieben, umfassend:
a. einen Kompressor,
b. einen Behälter zur Aufnahme eines in einen Kraftfahrzeugluftreifen einfüllbares Dichtmittel, wobei der Behälter einen Verbindungsanschluss aufweist,
c. eine Ventileinheit zur Erzeugung einer Mischung aus Dichtmittel und Druckgas, wobei die Ventileinheit einen mit dem Verbindungsanschluss des Behälters hermetisch verschließbaren Aufnahmeanschluss aufweist und die Ventileinheit mit einer an den Kompressor anschließbaren Einlassleitung und einer an den Kraftfahrzeugluftreifen anschließbaren Auslassleitung versehen ist,
d. eine Anzeige- und Anleitungseinheit, welche eine Anzeige eines Manometers zum Anzeigen des Luftdrucks in einem Kraftfahrzeugluftreifen und eine Anzeige einer Bedienungsanleitung des Pannenhilfesystems aufweist,
dadurch gekennzeichnet, dass
die Symmetrie des Behälters eine Drehgruppe C₂ aufweist und der Aufnahmeanschluss und der Verbindungsanschluss so eingerichtet sind, dass der Behälter mit dem Verbindungsanschluss im Zusammenwirken mit dem Aufnahmeanschluss in dem betriebsbereiten und hermetisch verschlossenen Zustand eine vorbestimmte Position einnimmt, wobei die eine vorbestimmte Position so gewählt ist, dass die Senkrechte einer Wandfläche des Behälters in Richtung geometrischen Mittelpunkt der Anzeige- und Anleitungseinheit zeigt, wobei die Senkrechte an dem Punkt auf der Wandfläche gebildet wird, der den kleinsten Abstand zur Mittelachse des Behälters aufweist,
- der Aufnahmeanschluss der Ventileinheit ein Innengewinde zur Aufnahme des Verbindungsanschlusses des Behälters aufweist und der Verbindungsanschluss des Behälters ein Schraubverschluss mit einem in das besagte Innengewinde anschraubbaren Außengewinde aufweist,
- die maximale Quererstreckung des Behälters mindestens 100% des Abstandes zwischen dem Mittelpunkt des Innengewindes der Ventileinheit und dem geometrischen Mittelpunkt der Anzeige- und Anleitungseinheit entspricht,
- der Behälter zu einer Mittelachse parallel verlaufende Längserstreckung sowie eine kleinere Quererstreckung und eine zur kleineren Quererstreckung senkrecht verlaufenden größeren Quererstreckung aufweist, wobei das Verhältnis zwischen kleinerer Quererstreckung zur größeren Quererstreckung im Bereich 0,55:1 bis 1:1 liegt
   und
- das Innengewinde und das Außengewinde jeweils mindestens einen Gewindeanfang aufweisen, wobei die Gewindeanfänge so positioniert sind, dass die vorbestimmte Position des im Innengewinde angeschraubten Behälters so ist, dass die Wandfläche mit dem kleinsten zum Schraubverschluss des Behälters in Richtung des geometrischen Mittelpunkts der Anzeige- und Anleitungseinheit des Pannenhilfesystems zeigt.

Die vorstehend beschriebenen vorteilhaften Aspekte eines erfindungsgemäßen Pannenhilfesystems zum Abdichten und Aufpumpen von Kraftfahrzeugluftreifen gelten auch für sämtliche Aspekte eines nachstehend beschriebenen Verfahrens und die nachstehend diskutierten vorteilhaften Aspekte erfindungsgemäßer Verfahren gelten entsprechend für sämtliche Aspekte eines erfindungsgemäßen Pannenhilfesystems zum Abdichten und Aufpumpen von Kraftfahrzeugluftreifen.

Im Rahmen der vorliegenden Erfindung umfasst der Ausdruck "Gewindedorn" bevorzugt den Teil der Spritzgussanlage, welcher die Position des Gewindes und insbesondere der Gewindeanfänge bestimmt.

Ein Vorteil des vorstehend beschriebenen Aspekts der vorliegenden Erfindung ist, dass mittels des erfindungsgemäßen Spritzgussverfahren die Gewindeanfänge eines Innengewindes oder eines Außengewindes eines vorstehend als bevorzugt beschriebenen erfindungsgemäßen Pannenhilfesystems wie vorstehend als vorteilhaft beschrieben positioniert werden können.

### Figurenbeschreibung:

Es zeigt:
- Figur 1:: Draufsicht auf ein schematisch dargestelltes nicht erfindungsgemäßes Pannenhilfesystem mit einem Behälter in einer unvorteilhaften Drehposition,
- Figur 2:: Perspektivische Ansicht eines schematisch dargestellten nicht erfindungsgemäßen Pannenhilfesystems mit einem Behälter in einer unvorteilhaften Drehposition,
- Figur 3:: Draufsicht auf ein schematisch dargestelltes erfindungsgemäßes Pannenhilfesystem mit einem Behälter in vorbestimmten und vorteilhaften Drehposition,
- Figur 4:: Perspektivische Ansicht eines schematisch dargestellten Behälters eines erfindungsgemäßen Pannenhilfesystems, dessen Symmetrie eine C₂-Drehachse aufweist.

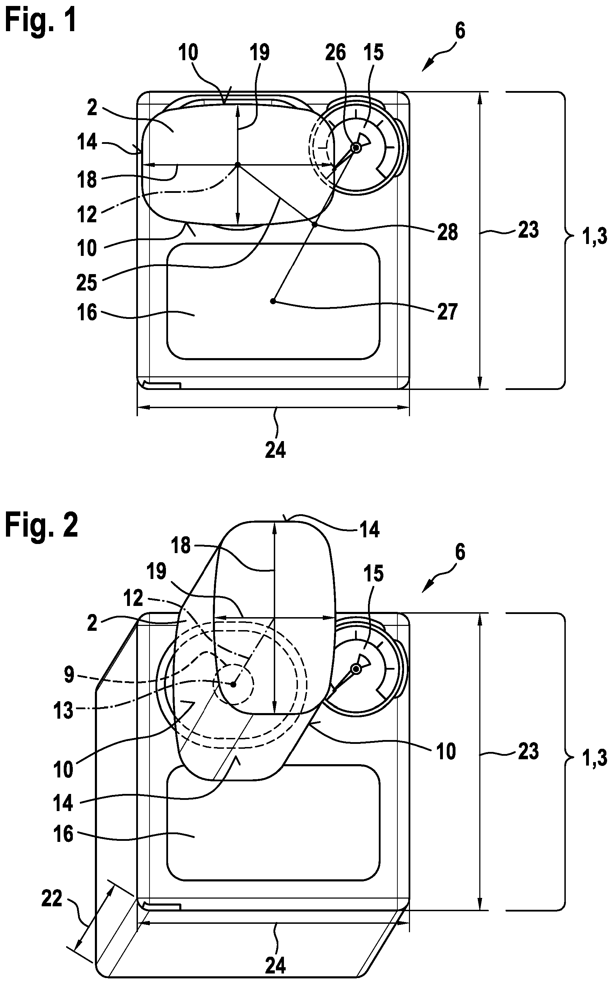

Figur 1 zeigt eine schematische Darstellung eines erfindungsgemäßen Pannenhilfesystems 6 mit einem Kompressor 1, einem Behälter 2 und einer Ventileinheit 3, wobei die Ventileinheit 3 und der Kompressor 1 integral zu einem Bauteil miteinander verbaut sind und der Aufnahmeanschluss nahe einer Kante des Bauteils umfassend die Ventileinheit 3 und den Kompressor 1 angeordnet ist. Die Ventileinheit 3 umfasst dabei eine Anzeigeeinheit 15 und eine Anleitungseinheit 16, deren Flächen jeweils einen geometrischen Mittelpunkt 26, 27 aufweisen. Der geometrische Mittelpunkt 28 der beiden geometrische Mittelpunkte 26, 27 liegt dabei genau auf der Hälfte des Abstandes zwischen dem geometrischen Mittelpunkt 26 und dem geometrischen Mittelpunkt 27. Die Strecke zwischen dem geometrischen Mittelpunkt 28 und der Mittelachse 12 des Behälters 2 bildet dabei die Verbindungsstrecke 25. Die Verbindungsstrecke 25 bildet hierbei mit der Senkrechten den Abweichungswinkel ß 4. Des Weiteren weist die Ventileinheit 3 eine Breite 24 und eine Länge 23 auf, wobei in Figur 1 die Breite 24 parallel zur größeren Quererstreckung 18 des Behälters 2 verläuft und die Länge 23 parallel zur kleineren

Quererstreckung 19 des Behälters 2 verläuft. Der Behälter 2 weist zudem zwei Wandflächen 10 auf, welche einen kleinsten Abstand zur Mittelachse 12 des Behälters 2 aufweisen. Zudem weist der Behälter 2 zwei Wandflächen 14 auf, welche einen größten Abstand zur Mittelachse 12 des Behälters 2 aufweisen. In Figur 1 ist deutlich erkennbar, dass durch die Position des Behälters 2 ein übermäßig großer Teil der Anzeigeeinheit 15 zum Ablesen des Druckes im Fahrzeugluftreifen verdeckt wird.

Figur 2 zeigt eine schematische Darstellung eines erfindungsgemäßen Pannenhilfesystems 6 mit einem Kompressor 1, einem Behälter 2 und einer Ventileinheit 3, wobei die Ventileinheit 3 und der Kompressor 1 integral zu einem Bauteil miteinander verbaut sind und der Aufnahmeanschluss 9 nahe einer Kante des Bauteils umfassend die Ventileinheit 3 und den Kompressor 1 angeordnet ist. Zudem ist der Mittelpunkt 13 des Aufnahmeanschlusses 9. Die Ventileinheit 3 umfasst dabei eine Anzeigeeinheit 15 und eine Anleitungseinheit 16. Des Weiteren weist die Ventileinheit 3 eine Höhe, 22, eine Breite 24 und eine Länge 23 auf, wobei in Figur 2 die Breite 24 parallel zur kleineren Quererstreckung 19 des Behälters 2 verläuft und die Länge 23 parallel zur größeren Quererstreckung 18 des Behälters 2 verläuft. Der Behälter 2 weist zudem zwei Wandflächen 10 auf, welche einen kleinsten Abstand zur Mittelachse 12 des Behälters 2 aufweisen. Zudem weist der Behälter 2 zwei Wandflächen 14 auf, welche einen größten Abstand zur Mittelachse 12 des Behälters 2 aufweisen. In Figur 2 ist deutlich erkennbar, dass durch die Position des Behälters 2 ein übermäßig großer Teil der Anleitungseinheit 16 zum Ablesen der Bedienungsanleitung des Pannenhilfesystems 6 verdeckt wird.

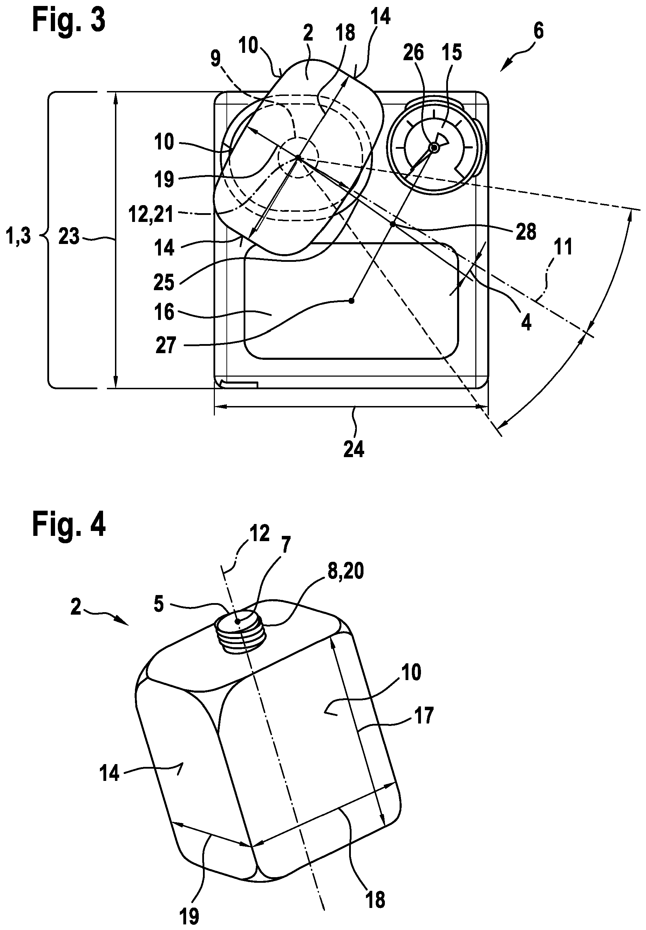

Figur 3 zeigt eine schematische Darstellung eines erfindungsgemäßen Pannenhilfesystems 6 mit einem Kompressor 1, einem Behälter 2 und einer Ventileinheit 3, wobei die Ventileinheit 3 und der Kompressor 1 integral zu einem Bauteil miteinander verbaut sind und der Aufnahmeanschluss nahe einer Kante des Bauteils umfassend die Ventileinheit 3 und den Kompressor 1 angeordnet ist. Die Ventileinheit 3 umfasst dabei eine Anzeigeeinheit 15 eine Anleitungseinheit 16, deren Flächen jeweils einen geometrischen Mittelpunkt 26, 27 aufweisen. Der geometrische Mittelpunkt 28 der beiden geometrische Mittelpunkte 26, 27 liegt dabei genau auf der Hälfte des Abstandes zwischen dem geometrischen Mittelpunkt 26 und dem geometrischen Mittelpunkt 27. Die Strecke zwischen dem geometrischen Mittelpunkt 28 und der Mittelachse 12 des Behälters 2 bildet dabei die Verbindungsstrecke 25. Die Verbindungsstrecke 25 bildet hierbei mit der Senkrechten 11 den Abweichungswinkel ß 4, wobei der Abweichungswinkel ß in Figur 3 ca. 8° ist. Die Senkrechte 11 steht dabei senkrecht auf den Wandflächen 10 des Behälters 2, welche den kleinsten Abstand zur Mittelachse 12 des Behälters 2 aufweisen. Zudem ist in Figur 3 verdeutlicht, was ein Abweichungswinkel ß im Rahmen der vorliegenden Erfindung dargestellt wird. Des Weiteren weist die Ventileinheit 3 eine Breite 24 und eine Länge 23 sowie einen Aufnahmeanschluss 9 mit einer Mittelachse 21 auf, wobei der Aufnahmeanschluss 9 in Figur 3 unterhalb des Behälters 2 liegt. Der Behälter 2 weist zudem eine größere Quererstreckung 18. Zudem weist der Behälter 2 zwei Wandflächen 14 auf, welche einen größten Abstand zur Mittelachse 12 des Behälters 2 aufweisen. In Figur 3 ist deutlich erkennbar, dass durch die Position des Behälters 2 weder ein übermäßig großer Teil der Anzeigeeinheit 15 noch ein übermäßig großer Teil der Anleitungseinheit 16 zum Ablesen der Bedienungsanleitung des Pannenhilfesystems 6 verdeckt wird.

Figur 4 zeigt eine schematische Darstellung eines Behälters 2 einer erfindungsgemäßen Vorrichtung, wobei die Symmetrie des Behälters 2 in Figur 4 im Rahmen der vorliegenden Erfindung eine durch die Mittelachse 12 verlaufende C₂-Drehachse aufweist. Zudem weist der Behälter 2 einen Verbindungsanschluss 8 mit einem Mittelpunkt 7 und mit einem Gewinde mit einem Gewindeanfang 5 auf. Der Verbindungsanschluss 8 des Behälters 2 in Figur 4 ist als Schraubverschluss 20 mit einem Außengewinde ausgeführt. Der Behälter 2 weist zudem eine größere Quererstreckung 18, eine Längserstreckung 17 sowie zwei Wandflächen 10 auf, welche einen kleinsten Abstand zur Mittelachse 12 des Behälters 2 aufweisen. Zudem weist der Behälter 2 zwei Wandflächen 14 auf, welche einen größten Abstand zur Mittelachse 12 des Behälters 2 aufweisen

### Bezugszeichenliste

- 1: Druckgasquelle, Kompressor
- 2: Behälter zur Aufnahme eines in einen Kraftfahrzeugluftreifen einfüllbares Dichtmittel
- 3: Ventileinheit zur Erzeugung einer Mischung aus Dichtmittel und Druckgas
- 4: Abweichungswinkel ß
- 5: Gewindeanfang
- 6: Pannenhilfesystem zum Abdichten und Aufpumpen von Kraftfahrzeugluftreifen
- 7: Mittelpunkt des Verbindungsanschlusses
- 8: Verbindungsanschluss
- 9: Aufnahmeanschluss
- 10: Wandfläche mit dem kleinsten Abstand zur Mittelachse des Behälters
- 11: Senkrechte an Wandfläche
- 12: Mittelachse des Behälters, C₂-Drehachse des Behälters
- 13: Mittelpunkt des Aufnahmeanschlusses
- 14: Wandfläche mit dem größten Abstand zur Mittelachse des Behälters
- 15: Anzeigeeinheit, Anzeige eines Manometers zum Anzeigen des Reifenluftdrucks
- 16: Anleitungseinheit, Anzeige einer Bedienungsanleitung des Pannenhilfesystems
- 17: Längserstreckung des Behälters in Längserstreckungsrichtung
- 18: größere Quererstreckung des Behälters in einer Quererstreckungsrichtung
- 19: kleinere Quererstreckung des Behälters in weiterer Quererstreckungsrichtung
- 20: Schraubverschluss mit Außengewinde
- 21: Mittelachse des Innengewindes der Ventileinheit
- 22: Höhe der Ventileinheit
- 23: Länge der Ventileinheit
- 24: Breite der Ventileinheit
- 25: Verbindungsstrecke zwischen dem geometrischen Mittelpunkt und dem Mittelpunkt der Mittelachse des Behälters
- 26: geometrischer Mittelpunkt der Anzeigeeinheit
- 27: geometrischer Mittelpunkt der Anleitungseinheit
- 28: geometrischer Mittelpunkt der Anzeige- und Anleitungseinheit

## Patentansprüche

1. Pannenhilfesystem zum Abdichten und Aufpumpen von Kraftfahrzeugluftreifen, wobei das Pannenhilfesystem (6) folgende Einrichtungen umfasst:
a. eine Druckgasquelle (1), bevorzugt einen Kompressor,
b. einen Behälter (2) zur Aufnahme eines in einen Kraftfahrzeugluftreifen einfüllbares Dichtmittel (7), wobei der Behälter (2) einen Verbindungsanschluss aufweist,
c. eine Ventileinheit (3) zur Erzeugung einer Mischung aus Dichtmittel (7) und/oder Druckgas, wobei die Ventileinheit (3) einen mit dem Verbindungsanschluss (8) des Behälters (2) hermetisch verschließbaren Aufnahmeanschluss (9) aufweist und die Ventileinheit (3) mit einer an die Druckgasquelle (1) anschließbaren Einlassleitung (4) und einer an den Kraftfahrzeugluftreifen anschließbaren Auslassleitung (5) versehen ist,
d. eine Anzeigeeinheit (15), welche bevorzugt eine Anzeige eines Manometers zum Anzeigen des Luftdrucks in einem Kraftfahrzeugluftreifen, oder eine Anleitungseinheit (16), welche bevorzugt eine Anzeige einer Bedienungsanleitung des Pannenhilfesystems (1) aufweist,
wobei die Symmetrie des Behälters (2) keine Drehgruppe C_{∞} aufweist und der Aufnahmeanschluss (9) und der Verbindungsanschluss (8) so eingerichtet sind, dass der Behälter (2) mit dem Verbindungsanschluss (8) im Zusammenwirken mit dem Aufnahmeanschluss (9) in dem betriebsbereiten und/oder hermetisch verschlossenen Zustand eine vorbestimmte Position einnimmt,
wobei der Aufnahmeanschluss (9) der Ventileinheit (8) ein Innengewinde zur Aufnahme des Verbindungsanschlusses (8) des Behälters (2) aufweist und der Verbindungsanschluss (8) des Behälters (2) ein Schraubverschluss (20) mit einem in das besagte Innengewinde anschraubbaren Außengewinde aufweist,
**dadurch gekennzeichnet, dass**
das Innengewinde des Aufnahmeanschlusses (9) der Ventileinheit (3) eine Aussparung zum Einrasten einer Erhebung aufweist und das Außengewinde des Schraubverschlusses (20) eine Erhebung zum Einrasten in eine Aussparung aufweist.

2. Pannenhilfesystem nach Anspruch 1, wobei die eine vorbestimmte Position so gewählt ist, dass die Anzeige- oder Anleitungseinheit (15, 16) zumindest teilweise sichtbar ist, bevorzugt größtenteils sichtbar, besonders bevorzugt gänzlich sichtbar.

3. Pannenhilfesystem nach einem der vorangehenden Ansprüche, wobei die eine vorbestimmte Position des Behälters (2) so gewählt ist, dass die Senkrechte (11) einer Wandfläche (10) des in der vorbestimmten Position befindlichen Behälters (2) in Richtung geometrischen Mittelpunkt (26, 27, 28) der Anzeige- und/oder Anleitungseinheit (15, 16) zeigt, wobei die Senkrechte (11) an dem Punkt auf der Wandfläche (10) und/oder an der Wandfläche (10) gebildet wird, der oder die den kleinsten Abstand zur Mittelachse (12) des Behälters (2) aufweist.

4. Pannenhilfesystem nach einem der vorangehenden Ansprüche, wobei die maximale Quererstreckung des Behälters (2) mindestens der Hälfte des Abstandes zwischen dem Mittelpunkt (13) des Aufnahmeanschlusses (9) der Ventileinheit (3) und dem geometrischen Mittelpunkt (26, 27, 28) der Anzeige- und/oder Anleitungseinheit (15, 16) entspricht, bevorzugt mindestens 75 % des Abstandes, besonders bevorzugt mindestens 100 % des Abstandes, ganz besonders bevorzugt mindestens 150 % oder mindestens 200 % des Abstandes.

5. Pannenhilfesystem nach einem der vorangehenden Ansprüche, wobei die maximale Quererstreckung des Behälters (2) mindestens der Hälfte des Abstandes zwischen der Mittelachse (21) des Innengewindes der Ventileinheit (3) und dem geometrischen Mittelpunkt (26, 27, 28) der Anzeige- und/oder Anleitungseinheit (15, 16) entspricht, bevorzugt mindestens 75 % des Abstandes, besonders bevorzugt mindestens 100 % des Abstandes, ganz besonders bevorzugt mindestens 150 % oder mindestens 200 % des Abstandes.

6. Pannenhilfesystem nach einem der vorangehenden Ansprüche, wobei das Innengewinde des Aufnahmeanschlusses (9) und das Außengewinde des Schraubverschlusses (20) jeweils mindestens einen Gewindeanfang (5) aufweisen, wobei die Gewindeanfänge (5) so positioniert sind, dass der Behälter (2) mit dem Verbindungsanschluss (8) im Zusammenwirken mit dem Aufnahmeanschluss (9) in dem betriebsbereiten und/oder hermetisch verschlossenen Zustand eine vorbestimmte Position einnimmt, sodass die Anzeige- oder Anleitungseinheit (15, 16) zumindest teilweise sichtbar ist, bevorzugt größtenteils sichtbar, besonders bevorzugt gänzlich sichtbar.

7. Pannenhilfesystem nach einem der vorangehenden Ansprüche, wobei der Behälter (2) eine kleinere Quererstreckung (19) und eine zur kleineren Quererstreckung (19) senkrecht verlaufenden größeren Quererstreckung (18) aufweist, wobei das Verhältnis zwischen kleinerer Quererstreckung (19) zur größeren Quererstreckung (18) bevorzugt im Bereich von 0,1:1 bis 1:1, besonders bevorzugt im Bereich von 0,4:1 bis 1:1, ganz besonders bevorzugt im Bereich von 0,55:1 bis 1:1.

8. Pannenhilfesystem nach einem der vorangehenden Ansprüche, wobei der Behälter (2) quaderförmig ist und eine zu einer Mittelachse (12) parallel verlaufende Längserstreckung (17) aufweist, wobei ein zur Längserstreckung (17) senkrecht verlaufender Querschnitt des Behälters (2) rechteckförmig ist, wobei die vorbestimmte Position des im Innengewinde des Aufnahmeanschlusses (9) angeschraubten Behälters (2) bevorzugt so ist, dass die Wandfläche (16) mit dem kleinsten oder dem zweitkleinsten Abstand zum Schraubverschluss (20) des quaderförmigen Behälters (2) in Richtung des geometrischen Mittelpunkts (26, 27, 28) der Anzeige- oder Bedieneinheit (15, 16) des Pannenhilfesystems (1) zeigt.

9. Pannenhilfesystem nach einem der vorangehenden Ansprüche, wobei eine Quererstreckung des Behälters (2) etwa der Höhe (22) der Ventileinheit (3) entspricht und bevorzugt eine weitere Erstreckung (17, 18, 19) des Behälters (2) der Länge (23) oder Breite (24) der Ventileinheit (3) entspricht.

## Claims

1. Breakdown assistance system for sealing and inflating pneumatic motor-vehicle tyres, wherein the breakdown assistance system (6) comprises the following devices:
a. a compressed-gas source (1), preferably a compressor,
b. a container (2) for receiving a sealant (7) able to be introduced into a pneumatic motor-vehicle tyre, wherein the container (2) has a connecting port,
c. a valve unit (3) for producing a mixture of sealant (7) and/or compressed gas, wherein the valve unit (3) has a receiving port (9) which is able to be hermetically sealed with the connecting port (8) of the container (2), and the valve unit (3) is provided with an inlet line (4), which is connectable to the compressed-gas source (1), and an outlet line (5), which is connectable to the pneumatic motor-vehicle tyre,
d. a display unit (15), which preferably has a display of a manometer for indicating the air pressure in a pneumatic motor-vehicle tyre, or an instruction unit (16), which preferably has a display of operating instructions for the breakdown assistance system (1),
wherein a C_{∞} rotation group is not associated with the symmetry of the container (2), and the receiving port (9) and the connecting port (8) are configured in such a way that the container (2), with the connecting port (8), assumes a predetermined position in interaction with the receiving port (9) in the operationally ready and/or hermetically sealed state,
wherein the receiving port (9) of the valve unit (8) has an internal thread for receiving the connecting port (8) of the container (2), and the connecting port (8) of the container (2) has a screw coupling (20) with an external thread screwable into said internal thread,
**characterized in that**
the internal thread of the receiving port (9) of the valve unit (3) has a cutout for an elevation to latch into, and the external thread of the screw coupling (20) has an elevation for latching into a cutout.

2. Breakdown assistance system according to Claim 1, wherein the one predetermined position is selected in such a way that the display unit or instruction unit (15, 16) is at least partly visible, preferably mostly visible, particularly preferably fully visible.

3. Breakdown assistance system according to either of the preceding claims, wherein the one predetermined position of the container (2) is selected in such a way that the perpendicular (11) of a wall surface (10) of the container (2) situated in the predetermined position is directed towards the geometrical centre (26, 27, 28) of the display unit and/or instruction unit (15, 16), wherein the perpendicular (11) is formed at that point on the wall surface (10), and/or on the wall surface (10), which is at the smallest distance from the central axis (12) of the container (2).

4. Breakdown assistance system according to one of the preceding claims, wherein the maximum transverse extent of the container (2) corresponds to at least half of the distance between the centre (13) of the receiving port (9) of the valve unit (3) and the geometrical centre (26, 27, 28) of the display unit and/or instruction unit (15, 16), preferably at least 75% of the distance, particularly preferably at least 100% of the distance, very particularly preferably at least 150% or at least 200% of the distance.

5. Breakdown assistance system according to one of the preceding claims, wherein the maximum transverse extent of the container (2) corresponds to at least half of the distance between the central axis (21) of the internal thread of the valve unit (3) and the geometrical centre (26, 27, 28) of the display unit and/or instruction unit (15, 16), preferably at least 75% of the distance, particularly preferably at least 100% of the distance, very particularly preferably at least 150% or at least 200% of the distance.

6. Breakdown assistance system according to one of the preceding claims, wherein the internal thread of the receiving port (9) and the external thread of the screw coupling (20) each have at least one thread start (5), wherein the thread starts (5) are positioned in such a way that the container (2), with the connecting port (8), assumes a predetermined position in interaction with the receiving port (9) in the operationally ready and/or hermetically sealed state, such that the display unit or instruction unit (15, 16) is at least partly visible, preferably mostly visible, particularly preferably fully visible.

7. Breakdown assistance system according to one of the preceding claims, wherein the container (2) has a relatively small transverse extent (19) and has a relatively large transverse extent (18) perpendicular to the relatively small transverse extent (19), wherein the ratio between relatively small transverse extent (19) and relatively large transverse extent (18) is preferably in the range from 0.1:1 to 1:1, particularly preferably in the range from 0.4:1 to 1:1, very particularly preferably in the range from 0.55:1 to 1:1.

8. Breakdown assistance system according to one of the preceding claims, wherein the container (2) is cuboidal and has a longitudinal extent (17) which is parallel to a central axis (12), wherein a cross section of the container (2) perpendicular to the longitudinal extent (17) is rectangular, wherein the predetermined position of the container (2) screwed in the internal thread of the receiving port (9) is preferably such that the wall surface (16) which is at the smallest or second smallest distance from the screw coupling (20) of the cuboidal container (2) is directed towards the geometrical centre (26, 27, 28) of the display unit or instruction unit (15, 16) of the breakdown assistance system (1).

9. Breakdown assistance system according to one of the preceding claims, wherein a transverse extent of the container (2) corresponds approximately to the height (22) of the valve unit (3), and preferably a further extent (17, 18, 19) of the container (2) corresponds to the length (23) or width (24) of the valve unit (3).

## Revendications

1. Système de dépannage destiné à étanchéifier et à gonfler des pneumatiques de véhicules à moteur, le système de dépannage (6) comprenant des dispositifs suivants :
a. une source de gaz comprimé (1), de préférence un compresseur,
b. un récipient (2) destiné à recevoir un produit d'étanchéité (7) pouvant être introduit dans un pneumatique de véhicule à moteur, le récipient (2) comportant un raccorde de liaison,
c. une unité de soupape (3) destinée à produire un mélange de produit d'étanchéité (7) et/ou de gaz comprimé, l'unité de soupape (3) comportant un raccord de réception (9) pouvant être fermé hermétiquement avec le raccord de liaison (8) du récipient (2), et l'unité de soupape (3) étant pourvue d'une conduite d'entrée (4) pouvant être raccordée à la source de gaz comprimé (1) et d'une conduite de sortie (5) pouvant être raccordée au pneumatique de véhicule à moteur,
d. une unité d'affichage (15), laquelle comporte de manière préférée un affichage d'un manomètre pour afficher la pression de l'air dans un pneumatique de véhicule à moteur, ou une unité de guidage (16), qui comporte de manière préférée un affichage d'un guide d'utilisation du système de dépannage (1),
la symétrie du récipient (2) ne comportant aucun groupe en rotation C_{∞} et le raccord de réception (9) et le raccord de liaison (8) étant configurés de telle sorte que le récipient (2) adopte, avec le raccord de liaison (8), en coopération avec le raccord de réception (9), une position prédéfinie dans l'état prêt à fonctionner et/ou hermétiquement fermé,
le raccord de réception (9) de l'unité de soupape (8) comportant un filetage intérieur pour recevoir le raccord de liaison (8) du récipient (2) et le raccord de liaison (8) du récipient (2) comportant une fermeture à vis (20) avec un filetage extérieur pouvant être vissé dans ledit filetage intérieur.
**caractérisé en ce que**
le filetage intérieur du raccord de réception (9) de l'unité de soupape (3) comporte un évidement pour l'encliquetage d'une partie surélevée, et le filetage extérieur de la fermeture à vis (20) comporte une partie surélevée pour l'encliquetage dans un évidement.

2. Système de dépannage selon la revendication 1, la position prédéfinie étant choisie de telle sorte que l'unité d'affichage ou de guidage (15, 16) est au moins en partie visible, de manière préférée largement visible, de manière particulièrement préférée entièrement visible.

3. Système de dépannage selon l'une des revendications précédentes, la position prédéfinie du récipient (2) étant choisie de telle sorte que la perpendiculaire (11) d'une surface de paroi (10) du récipient (2) se trouvant dans la position prédéfinie pointe en direction du centre géométrique (26, 27, 28) de l'unité d'affichage et/ou de guidage (15, 16), la perpendiculaire (11) étant formée à l'endroit de la surface de paroi (10) et/ou de la surface de paroi (10) qui présente la plus petite distance par rapport à l'axe central (12) du récipient (2).

4. Système de dépannage selon l'une des revendications précédentes, l'extension transversale maximale du récipient (2) correspondant au moins à la moitié de la distance entre le centre (13) du raccord de réception (9) de l'unité de soupape (3) et le centre géométrique (26, 27, 28) de l'unité d'affichage et/ou de guidage (15, 16), de manière préférée au moins à 75 % de la distance, de manière particulièrement préférée au moins à 100 % de la distance, de manière très particulièrement préférée au moins à 150 % ou au moins à 200 % de la distance.

5. Système de dépannage selon l'une des revendications précédentes, l'extension transversale maximale du récipient (2) correspondant au moins à la moitié de la distance entre l'axe central (21) du filetage intérieur de l'unité de soupape (3) et le centre géométrique (26, 27, 28) de l'unité d'affichage et/ou de guidage (15, 16), de manière préférée au moins à 75 % de la distance, de manière particulièrement préférée au moins à 100 % de la distance, de manière très particulièrement préférée au moins à 150 % ou au moins à 200 % de la distance.

6. Système de dépannage selon l'une des revendications précédentes, le filetage intérieur du raccord de réception (9) et le filetage extérieur de la fermeture à vis (20) comportant chacun au moins un début (5) de filetage, les débuts (5) de filetage étant positionnés de telle sorte que le récipient (2) adopte, avec le raccord de liaison (8), en coopération avec le raccord de réception (9), une position prédéfinie dans l'état prêt à fonctionner et/ou hermétiquement fermé, si bien que l'unité d'affichage ou de guidage (15, 16) est au moins en partie visible, de manière préférée largement visible, de manière particulièrement préférée entièrement visible.

7. Système de dépannage selon l'une des revendications précédentes, le récipient (2) présentant une extension transversale plus petite (19) et une extension transversale plus grande (18) s'étendant perpendiculairement à l'extension transversale plus petite (19), le rapport entre l'extension transversale plus petite (19) et l'extension transversale plus grande (18) se situant de manière préférée dans la plage de 0,1:1 à 1:1, de manière particulièrement préférée dans la plage de 0,4:1 à 1:1, de manière très particulièrement préférée dans la plage de 0,55:1 à 1:1.

8. Système de dépannage selon l'une des revendications précédentes, le récipient (2) présentant une forme parallélépipédique et présentant une extension longitudinale (17) parallèle à un axe central (12), une section transversale du récipient (2) perpendiculaire à l'extension longitudinale (17) étant rectangulaire, la position prédéfinie du récipient (2) vissé dans le filetage intérieur du raccord de réception (9) étant de préférence telle que la surface de paroi (16) avec la plus petite ou la deuxième plus petite distance par rapport à la fermeture à vis (20) du récipient (2) parallélépipédique pointe en direction du centre géométrique (26, 27, 28) de l'unité d'affichage ou d'utilisation (15, 16) du système de dépannage (1).

9. Système de dépannage selon l'une des revendications précédentes, une extension transversale du récipient (2) correspondant approximativement à la hauteur (22) de l'unité de soupape (3) et de manière préférée une autre extension (17, 18, 19) du récipient (2) correspondant à la longueur (23) ou à la largeur (24) de l'unité de soupape (3).
